# EUROPEAN PATENT APPLICATION

(11) **EP 4 641 803 A1**
(43) Date of publication of application: **29.10.2025**
(21) Application number: 24863060.0
(22) Date of filing: 13.08.2024
(51) Int. Cl.: H01M 50/383, H01M 50/325, H01M 50/342, H01M 50/211, H01M 50/249

(54) **BATTERY PACK AND VEHICLE COMPRISING BATTERY PACK**

(30) Priority: 07.09.2023 KR 20230119302; 23.07.2024 KR 20240097201
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2024/012064
(87) International publication number: WO 2025/053478

(57) **Abstract**

A battery pack includes: a plurality of battery cells; a pack case that accommodates the plurality of battery cells; and a venting unit mountable in the pack case, and provided with a venting device that discharges a gas generated in the plurality of battery cells to an outside of the pack case, and a protection cover that covers at least a portion of the venting device.

## Description

### TECHNICAL FIELD

The present disclosure relates to a battery pack and an automobile including the battery pack.

This application is based on and claims priority from Korean Patent Application No. 10-2023-0119302, filed on September 7, 2023, with the Korean Intellectual Property Office, the disclosure of which is incorporated herein in its entirety by reference.

This application is based on and claims priority from Korean Patent Application No. 10-2024-0097201, filed on July 23, 2024, with the Korean Intellectual Property Office, the disclosure of which is incorporated herein in its entirety by reference.

### BACKGROUND ART

With the high applicability across product categories and the electrical characteristics such as high energy density, secondary batteries are being widely used in not only portable devices but also electric vehicles (EVs) and hybrid electric vehicles (HEVs) that are powered by electrical power sources. The secondary batteries are attracting attention as a new energy source for enhancing the environmental sustainability and the energy efficiency, not only because they achieve the primary advantage of drastically reducing the use of fossil fuels, but also because they produce no byproducts resulting from the use of energy.

The types of currently and universally used secondary batteries include, for example, lithium-ion batteries, lithium-polymer batteries, nickel-cadmium batteries, nickel-hydrogen batteries, and nickel-zinc batteries. The operation voltage of the unit secondary battery cell, *e.g.,* a unit battery cell, is about 2.5 V to 4.5 V. Thus, when a higher output voltage is required, a plurality of battery cells may be connected in series to form a battery pack. Further, according to the charge/discharge capacity required for a battery pack, a plurality of battery cells may be connected in parallel to form a battery pack. Thus, the number of battery cells included in the battery pack may be set variously according to the required output voltage or charge/discharge capacity.

Meanwhile, when a battery pack is formed by connecting a plurality of battery cells in series or parallel, in general, a battery module is first formed including at least one battery cell, and then, a battery pack or rack is formed by adding other components while using the at least one battery module. Further, in recent years, a battery pack has been manufactured in a cell-to-pack form, in which a plurality of battery cells is accommodated directly in a pack housing, or the like, without being packaged into a module.

### DISCLOSURE

### Technical Problem

The present disclosure provides a battery pack, which may ensure the safety and the reliability in an abnormal situation of a battery cell or a battery module, and an automobile including the battery pack.

The advantages of the present disclosure are not limited to those described above, and other advantages that are not described herein may be clearly understood by those of ordinary skill in the art from the descriptions of the disclosure herein below.

### Technical Solution

A battery pack according to an aspect of the present disclosure includes: a plurality of battery cells; a pack case that accommodates the plurality of battery cells; and a venting unit mountable in the pack case, and provided with a venting device that discharges a gas generated in the plurality of battery cells to an outside of the pack case, and a protection cover that covers at least a portion of the venting device.

In the battery pack above, the protection cover may cover an upper end portion of the venting device in order to block sparks emitted from the plurality of battery cells.

The battery pack may further include a module case that accommodates the plurality of battery cells in an internal space thereof, and is provided with a venting hole formed in a top thereof to communicate with the internal space.

In the battery pack above, the pack case may include a base frame on which the plurality of battery cells are placed, and a side frame extending upward from the base frame, and allowing the venting device to be mounted therein, and the side frame may include a mounting hole into which at least a portion of the venting device is inserted.

In the battery pack above, the protection cover may include a main cover that is disposed to face the venting device and covers a front of the venting device, and a top cover that extends from the main cover toward the venting device and covers a top of the venting device.

In the battery pack above, the protection cover may further include a lower end bend formed to be bent from a lower end of at least one of the main cover and the top cover in a direction away from the venting device.

In the battery pack above, the protection cover may further include a projection portion provided to project outward from an outer surface of the main cover.

In the battery pack above, the top cover may be formed in a curved shape.

In the battery pack above, the protection cover may further include a protrusion portion provided to protrude upward from one end of the top cover that is connected to the main cover.

In the battery pack above, the top cover may be formed to slope upwardly toward the main cover.

In the battery pack above, the protection cover may include a cover housing that is mounted in the pack case and connected to an extended end of the top cover, and allows at least a portion of the venting device to be inserted thereinto.

In the battery pack above, the cover housing may be coupled to one side surface of the pack case, and further include a sealing member that seals a separation space between the cover housing and the one side surface of the pack case.

In the battery pack above, the top cover may extend inward from the cover housing so that the top cover and the main cover are provided inside the pack case.

An automobile according to the present disclosure may include the battery pack described above.

Another aspect of the present disclosure provides a battery pack case that accommodates a plurality of battery cells and is equipped with a venting unit. The venting unit includes: a venting device that is mounted in the battery pack case, and discharges a gas generated in the plurality of battery cells to an outside of the battery pack case; and a protection cover that covers at least a portion of the venting device.

In the battery pack case above, the protection cover may cover an upper end portion of the venting device to block sparks emitted from the plurality of battery cells.

The battery pack case may further include a base frame on which the plurality of battery cells are placed; and a side frame extending upward from the base frame, and allowing the venting device to be mounted therein. The side frame may include a mounting hole into which at least a portion of the venting device is inserted.

In the battery pack case above, the protection cover may include: a guiding channel capable of blocking sparks emitted from the plurality of battery cells, and simultaneously, guiding a direction of the sparks to an inside of the battery pack.

### Advantageous Effects

According to an aspect of the present disclosure, sparks occurring in an abnormal situation of battery cells are prevented from being exposed to the outside of a pack case, so that the safety and the reliability may be ensured.

According to an aspect of the present disclosure, the spread of flames outside the battery pack is suppressed, so that the performance of prevention of thermal propagation in units of a battery pack may be effectively achieved.

As a result, it is possible to prevent or delay events such as fire or explosion caused from the phenomenon of thermal runaway in a battery pack including numerous battery modules or an apparatus equipped with the battery pack.

In an electric automobile, the propagation of thermal runaway across battery cells or battery modules is suppressed or delayed, which may give occupants in an automobile enough time to escape the automobile or hold the driving of the automobile.

According to an aspect of the present disclosure, a venting gas generated in an abnormal situation of battery cells may be smoothly discharged to the outside of a pack case.

According to an aspect of the present disclosure, in an abnormal situation of a particular battery cell or battery module inside a single battery pack, a hot gas or the like generated in the battery cell may be quickly discharged to the outside of the pack case. Thus, the remaining battery cells or battery modules may be protected from the thermal damage as much as possible, which may prevent a series of secondary fires.

The present disclosure may achieve various other effects, which are described herein below in the embodiments of the present disclosure, and for example, descriptions of effects that may easily be inferred by those skilled in the art are omitted herein.

### DESCRIPTION OF DRAWINGS

Since the drawings attached herewith serve to facilitate the understanding of the technical idea of the present disclosure in conjunction with the detailed description of the invention herein below, the present disclosure should not be construed as being limited to the matters illustrated in the drawings.
FIG. 1 is a perspective view of an entire battery pack according to an embodiment of the present disclosure.
FIG. 2 is an exploded perspective view illustrating a portion of the configuration of the battery pack according to an embodiment of the present disclosure.
FIG. 3 is an exploded perspective view illustrating a main portion of the battery pack according to an embodiment of the present disclosure.
FIG. 4 is an enlarged view of a portion of the battery pack according to an embodiment of the present disclosure.
FIG. 5 is a view of a venting unit included in the battery pack according to an embodiment of the present disclosure, when viewed from the inside of a pack case.
FIG. 6 is a view illustrating a direction in which sparks are discharged inside the battery pack according to an embodiment of the present disclosure. For example, FIG. 6 may be a view illustrating the cross section taken along the line I-I' of FIG. 1.
FIG. 7 is an enlarged cross-sectional view of the main portion of the battery pack according to an embodiment of the present disclosure.
FIG. 8 is a view illustrating the venting unit included in the battery pack according to an embodiment of the present disclosure.
FIG. 9 is a view illustrating a venting unit included in the battery pack according to another embodiment of the present disclosure.
FIG. 10 is a view illustrating a venting unit included in the battery pack according to yet another embodiment of the present disclosure.
FIG. 11 is a view illustrating a venting unit included in the battery pack according to still yet another embodiment of the present disclosure.
FIG. 12 is a view illustrating a venting unit included in the battery pack according to still yet another embodiment of the present disclosure.
FIG. 13 is a view illustrating a state where a protection cover is removed from the battery pack according to an embodiment of the present disclosure.
FIG. 14 is a perspective view of a portion of the battery pack according to an embodiment of the present disclosure, when viewed from outside.
FIG. 15 is a cross-sectional view of the battery pack according to an embodiment of the present disclosure, when viewed from above. For example, FIG. 15 may be a view illustrating a portion of the cross section taken along the line II-II' of FIG. 1.
FIG. 16 is a schematic perspective view of an automobile including the battery pack according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure are described in detail with reference to the accompanying drawings. Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

Thus, it can be appreciated that the embodiments described herein and the configurations illustrated in the drawings are merely example embodiments of the present disclosure, which do not exhaustively represent the technical idea of the present disclosure, and various equivalents and modifications may be made to substitute the present disclosure at the time of filing the present disclosure.

The present disclosure includes various embodiments. In the embodiments, overlapping descriptions of substantially the same or similar components are omitted, and descriptions are made focusing on differences.

In the present disclosure, expressions indicating directions such as "up," "down," "left," "right," "front," and "rear" may be used. It is obvious to those skilled in the art that the expressions are used only to facilitate the description, and may vary, for example, according to the location of a target object or an observer.

For example, in embodiments of the present disclosure, the X-axis direction illustrated in the drawings may refer to the left-right direction, the Y-axis direction may refer to the front-back direction perpendicular to the X-axis direction in the horizontal plane (X-Y plane), and the Z-axis direction may refer to the up-down direction perpendicular to both the X-axis direction and the Y-axis direction (vertical direction).

When a thermal event such as a thermal runaway occurs in a battery pack, a gas may be emitted from battery cells included in the battery pack, and this gas may include, for example, flame. Further, in general, when the gas is emitted from the battery cells, fragments of electrode plates or active materials in the battery cells may be discharged outward in the state of being heated to high temperatures, and the heated particles may appear in the form of sparks.

In many cases, a battery pack is designed such that when an abnormal situation occurs in a particular battery cell or battery module, a hot gas or the like is discharged through a venting unit provided in a pack case in order to discharge the hot gas to the outside of the pack case. At this time, when sparks occurring with the hot gas are exposed to the outside of the pack case, the sparks may react with oxygen outside the battery pack, which may lead to flame or fire outside the battery pack. Further, when flame or fire occurs outside a particular battery pack, the fire or the like may spread to other neighboring battery packs or an apparatus equipped with the battery pack, resulting in more serious problems.

The present disclosure provides a technology, which prevents, for example, sparks or flame from being exposed to the outside of a battery pack through a venting unit, and thus, suppresses the occurrence or spread of flame, fire, or the like outside the battery pack.

For example, the present disclosure provides a battery pack, which may ensure the safety and reliability in an abnormal situation of battery cells or battery modules, and an automobile including the battery pack.

Hereinafter, embodiments of the present disclosure are described with reference to the drawings.

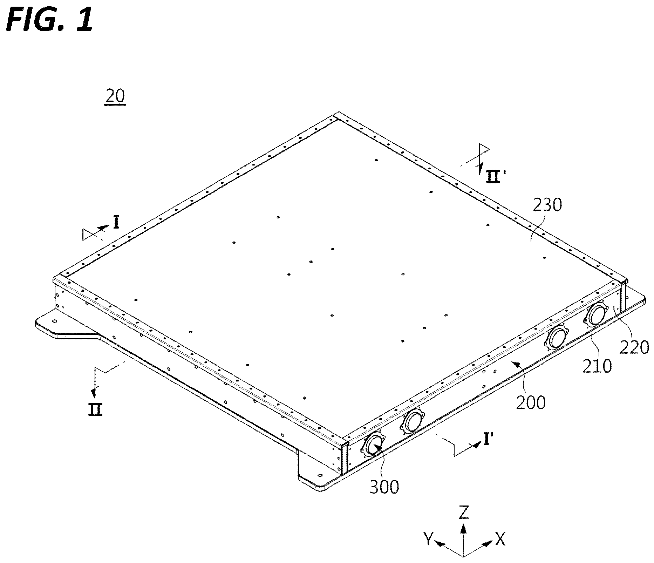

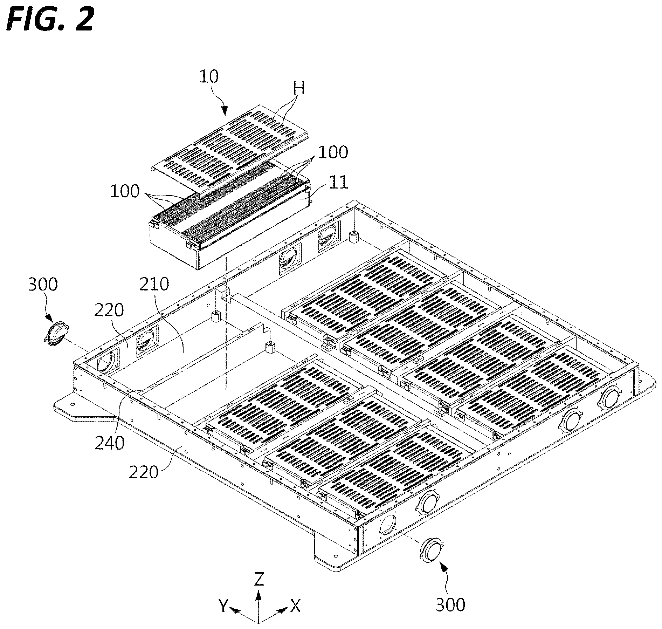

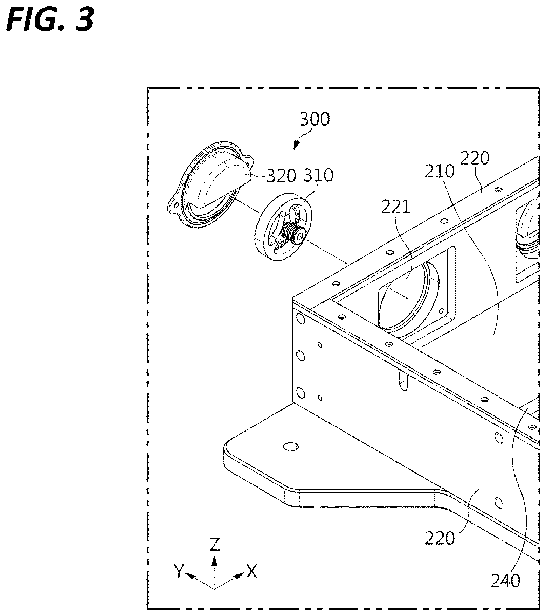

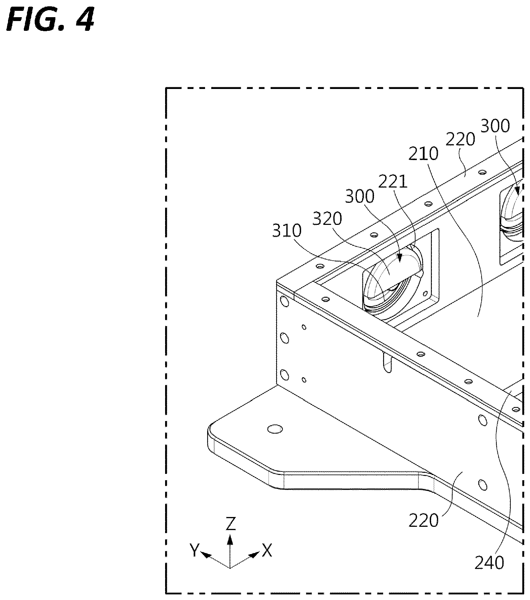

FIG. 1 is a perspective view of an entire battery pack according to an embodiment of the present disclosure. FIG. 2 is an exploded perspective view of a portion of the configuration of the battery pack according to an embodiment of the present disclosure. FIG. 3 is an exploded perspective view of a main portion of the battery pack according to an embodiment of the present disclosure, and FIG. 4 is an enlarged view illustrating a portion of the battery pack according to an embodiment of the present disclosure.

Referring to FIGS. 1 to 4, a battery pack 20 according to an embodiment of the present disclosure includes a battery cell 100, a pack case 200, and a venting unit 300.

First, referring primarily to FIG. 2, a plurality of battery cells 100 may be included. Although not illustrated, each of the plurality of battery cells 100 may include an electrode assembly, a cell case accommodating the electrode assembly, and electrode leads connected to the electrode assembly and drawn to the outside of the cell case to function as electrode terminals. In this case, the plurality of battery cells 100 may be electrically connected to each other.

Each battery cell 100 may be a pouch type secondary cell. The cell case of the pouch type secondary battery may be configured in the shape of a pouch in which a metal layer made of aluminum is interposed between polymer layers.

In an embodiment, as illustrated in FIG. 2, the plurality of battery cells 100 may be arranged side by side in the front-rear direction (Y-axis direction) while standing upright in the vertical direction (Z-axis direction). In this case, each battery cell 100 may be arranged such that a sealing part faces the left-right direction (X-axis direction) and the up-down direction (Z-axis direction), and an enclosure part faces the front-rear direction (Y-axis direction).

The present disclosure is not limited to the specific type or shape of the battery cell 100 described above, and various battery cells 100 known in the art at the time of the filing of the present disclosure may be employed to construct the battery pack 20 of the present disclosure. While the present embodiment relates to the pouch type secondary cells that have a high energy density and are easily stackable as illustrated in the figure, cylindrical or prismatic secondary cells may also be applied as the battery cells 100.

The pack case 200 may be configured to accommodate the plurality of battery cells 100. That is, the pack case 200 may provide an accommodation space for accommodating the plurality of battery cells 100. The pack case 200 may be made of or include a material ensuring a mechanical rigidity, such as a metal including steel or stainless steel (STS, SUS) or plastic, in order to safely protect the battery cells 100 and others accommodated therein.

Further, the battery pack 20 according to an embodiment of the present disclosure may include the venting unit 300. The venting unit 300 may be configured to be mounted in the pack case 200. In this case, a plurality of venting units 300 may be provided. Each venting unit 300 may include a venting device 310 and a protection cover 320.

The venting device 310 may be configured to discharge a gas generated in the battery cells 100 accommodated in the pack case 200, to the outside of the pack case 200. According to an embodiment, the venting device 310 may be configured such that when a venting gas is generated in the pack case 200, and thus, the internal pressure of the pack case 200 increases, the venting device 310 opens by the pressure of the venting gas, and the venting gas is discharged to the outside of the pack case 200.

For example, the venting device 310 may be configured to be opened and closed in response to the internal pressure of the pack case 200. For example, the venting device 310 may include an elastic unit, and may be configured such that a sealing unit covering an opening of the venting device 310 is opened and closed by the elastic force of the elastic unit. The present disclosure is not limited by the specific type or shape of the venting device 310 described above, and various venting devices 310 known in the art at the time of the filing of the present disclosure may be employed to construct the battery pack 20 of the present disclosure.

The protection cover 320 may be configured to cover at least a portion of the venting device 310. According to an embodiment of the present disclosure, the protection cover 320 may be configured to thoroughly block sparks occurring in the pack case 200 from passing through the protection cover 320.

The protection cover 320 may be made of a material having a low thermal conductivity and a superior heat and/or fire resistance. For example, the protection cover 320 may be made of a flame retardant mica material. Alternatively, the protection cover 320 may be made of a metal material having a rigidity and a heat resistance.

For example, sparks or flame with strong straightness may be emitted from the battery cells 100, and move toward the venting device 310 while hitting the structures provided inside the pack case 200. According to the configuration of the embodiment of the present disclosure described above, the protection cover 320 may block the sparks from being emitted to the outside of the pack case 200. Thus, it is possible to suppress the occurrence of flame caused from the reaction between the sparks and oxygen outside the pack case 200. As a result, according to the aspect of the present disclosure described above, the safety and reliability of the battery pack 20 may be ensured.

According to an embodiment of the present disclosure, as illustrated in FIG. 4, the protection cover 320 may be configured to cover a portion of the venting device 310. That is, the protection cover 320 may have a structure that covers the inner side of the venting device 310 by covering only a portion of the venting device 310 rather than the entire venting device 310. In this case, the sparks occurring in the battery cells 100 may be blocked by the protection cover 320, and at the same time, the venting gas may be smoothly discharged to the exposed portion of the venting device 310. Thus, when an abnormal situation occurs in the battery cells 100, the venting gas is quickly discharged to the outside of the pack case 200 through the venting device 310, so that the increase in internal pressure of the pack case 200 may be prevented, and the occurrence of a series of secondary fires across the remaining battery cells 100 may be suppressed or delayed.

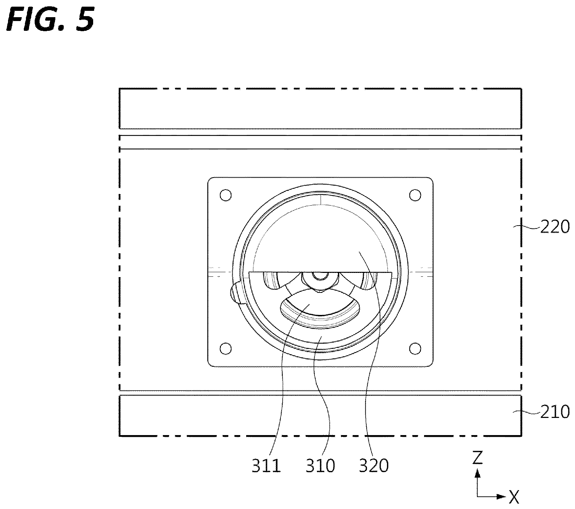

FIG. 5 is a view of a venting unit included in the battery pack according to an embodiment of the present disclosure, when viewed from the inside of the pack case, and

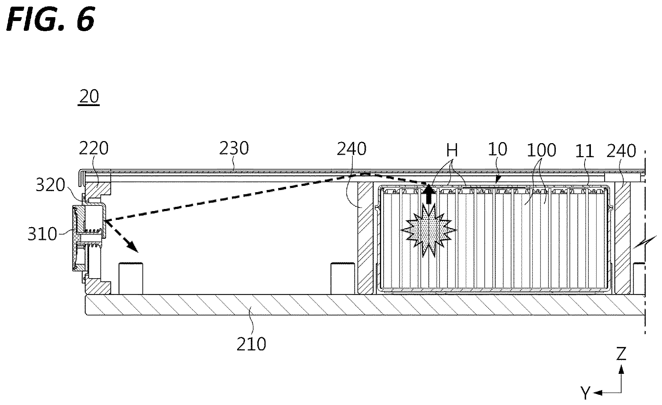

FIG. 6 is a view illustrating the direction in which sparks are emitted inside the battery pack according to an embodiment of the present disclosure. For example, FIG. 6 may be a view illustrating the cross section taken along the line I-I' of FIG. 1.

According to an embodiment of the present disclosure, the protection cover 320 may be configured to cover the upper end portion of the venting device 310 as illustrated in FIGS. 5 and 6.

For example, the venting gas or sparks emitted from the battery cells 100 may be in the high temperature state, and thus, have a strong tendency to travel upwards. Thus, when the protection cover 320 is configured to cover the upper end portion of the venting device 310 as in the embodiment above, the sparks with the strong straightness necessarily hit the protection cover 320, so that the outward emission of sparks may be more reliably suppressed. At the same time, due to the internal pressure, the venting gas may be smoothly discharged to the outside of the pack case 200 through the lower end portion of the venting device 310 that is exposed without being covered by the protection cover 320.

According to the embodiment of the present disclosure above, since the sparks emitted from the battery cells 100 are blocked by the venting device 310 of the pack case 200, the outward emission of sparks is prevented, so that the occurrence of flame outside the pack case 200 may be more effectively suppressed.

Further, the hot venting gas may move along the upper inner surface of the pack case 200 toward the side of the venting device 310, and be discharged outward. In this case, when the protection cover 320 covers the upper end portion of the venting device 310 as in the configuration of the embodiment described above, the flow direction of the venting gas may be deflected by the protection cover 320 before the venting gas is discharged through the venting device 310. Further, in this process, the outward emission of sparks or the like that are traveling toward the venting device 310 along with the venting gas may be suppressed by the protection cover 320.

Further, according to the embodiment of the present disclosure above, when the hot gas or the like is discharged to the outside of the pack case 200 in a situation such as thermal runaway, the discharged gas may not travel upward. For example, in a case where an occupant is present above the battery pack 10 as in an electric automobile, the upward discharge of gas, flame or the like is suppressed by the protection cover 320 of the venting device 310, so that the safety of the occupant may be further improved. Therefore, according to the embodiment of the present disclosure, the directional venting to the downward side of the battery pack 10 is implemented, so that the safety of a user, such as an occupant, present above the battery pack 10 may be improved.

The protection cover 320 may be provided on the further inner side from the venting device 310. The venting gas and/or sparks generated in the battery cells 100 may move to the venting device 310. That is, a venting path may be formed between the plurality of battery cells 100 and the venting unit 300, such that the venting gas and/or sparks flow through the venting path. In this case, the protection cover 320 may be configured to span across the venting path. According to an embodiment, the protection cover 320 may be provided at a specific location on the venting path formed on the further inner side from the venting device 310, and configured to suppress the movement of, for example, sparks.

Meanwhile, referring to FIG. 2, the plurality of battery cells 100 may be packaged into one or more battery modules 10. For example, the battery pack 20 according to the present disclosure may include one or more battery modules 10. The plurality of battery cells 100 may be included as components of one or more battery modules 10. In this case, the plurality of battery cells 100 included in the battery modules 10 may be electrically connected to each other.

Further, a plurality of battery modules 10 may be provided in the pack case 200. That is, the battery pack 20 according to the present disclosure may include a plurality of battery modules 10, and the plurality of battery cells 100 included in the battery pack 20 may be included by being distributed into the plurality of battery modules 10.

According to an embodiment, the battery pack 20 of the present disclosure may include a module case 11. The module case 11 may be configured to have an internal cavity, which accommodates at least some of the plurality of battery cells 100. For example, the module case 11 may be provided for each battery module 10 such that the plurality of battery cells 100 are grouped into the multiple battery modules 10, and may serve as boundaries that physically defines the internal space of each battery module 10.

Although not illustrated, the battery module 10 may include a busbar assembly and/or module terminals electrically connected to the plurality of battery cells 100 accommodated therein.

According to an embodiment, the battery module 10 may include venting holes H. The venting holes H may be configured such that the gas generated in the battery cells 100 accommodated in the module case 11 is discharged to the outside of the module case 11.

For example, the venting holes H may be provided in the module case 11 to implement the directional venting in the particular direction. For example, as illustrated in FIGS. 2 and 6, the venting holes H may be provided in the top of the module case 11. According to the present embodiment, the venting gas and/or sparks may be guided to be discharged from the top of the battery module.

According to the embodiment of the present disclosure above, as indicated by a dashed arrow in FIG. 6, the venting gas, sparks or the like may be guided toward the top of the pack case 200 by the venting holes H of the module case 11. Thus, when the venting gas, sparks or the like move along the upper inner surface of the pack case 200 toward the side of the venting device 310, the flow of the venting gas, sparks or the like may be more reliably blocked by the protection cover 320 covering the upper end portion of the venting device 310. Thus, the discharge of sparks to the outside of the pack case 200 may be more effectively suppressed.

Meanwhile, referring to FIG. 2, the pack case 200 according to an embodiment of the present disclosure may include a base frame 210 and a side frame 220.

The base frame 210 may form the lower surface of the pack case 200, and may be formed in the shape of a substantially square plate. The base frame 210 may be configured such that the plurality of battery cells 100 are stably placed on the upper surface thereof. Further, the base frame 210 may have a flat upper surface such that the plurality of battery cells 100 or the module cases 11 are stably placed on the upper surface.

The side frame 220 may extend upward from each side of the base frame 210. The side frame 220 may include a plurality of unit walls to surround the plurality of battery cells 100 or battery modules 10. According to an embodiment, the side frame 220 may form the side surfaces of the pack case 200, which include a rear wall positioned at the end of the base frame 210 in the +Y direction, a right wall positioned at the end of the base frame 210 in the +X direction, a front wall positioned at the end of the base frame 210 in the -Y direction, and a left wall positioned at the end of the base frame 210 in the -X directional.

The venting unit 300 may be provided in the side surface of the pack case 200, *e.g.,* in the side frame 220. Referring to FIG. 3, according to an embodiment, a mounting hole 221 may be provided in the side frame 220. The mounting hole 221 may be configured such that at least a portion of the venting device 310 is inserted thereinto. The shape and the size of the mounting hole 221 may vary according to the shape and the size of the venting device 310. At this time, the protection cover 320 may be positioned on the inner side of the side frame 220 to cover at least a portion of the venting device 310.

A plurality of mounting holes 221 may be formed in the side frame 220 as necessary. Further, a plurality of venting devices 310 and a plurality of protection covers 320 may be provided. For example, the venting device 310 may be disposed in at least a portion of the plurality of unit walls of the side frame 220. Further, the venting device 310 may be disposed separately in each of two or more unit walls, or two or more venting devices 310 may be disposed in one unit wall. For example, referring to FIG. 2, a plurality of venting devices 310 may be provided in each of the front and rear walls.

The protection cover 320 may be provided to correspond to each of the venting devices 310 disposed as described above. For example, as illustrated in FIG. 2, four venting devices 310 are provided in each of the front and rear walls, and the protection cover 320 is provided separately for each of the venting devices 310, so that a total of eight protection covers 320 may be included in the battery pack. The plurality of venting devices 310 and the plurality of protection covers 320, *e.g.,* the plurality of venting units 300, may be provided to be symmetrical to each other with respect to the center of the side frame 220.

Meanwhile, for example, the number and the locations of venting devices 310 and protection covers 320 described above referring to the embodiment of FIG. 2, and the like, are merely examples, and may be variously modified. For example, in FIG. 2, the venting devices 310 and the protection covers 320 are provided in the walls of the side frame 220 that extend in the X-axis direction, *e.g*., in the front and rear walls of the side frame 220. However, the venting devices 310 and the protection covers 320 may be provided in the walls of the side frame 220 that extend in the Y-axis direction, *e.g*., in the left and right walls. Further, according to the embodiment of the present disclosure described above, when an abnormal situation occurs in the battery cells 100, the hot gas or the like may be discharged in both directions of the pack case 200, so that the gas may be more quickly discharged to the outside of the pack case 200.

Meanwhile, referring to FIGS. 1 and 6, the battery pack 20 according to an embodiment of the present disclosure may further include a pack lid 230. The pack lid 230 may be configured to cover the top of the plurality of battery cells 100. To this end, the pack lid 230 may be connected to the top of the side frame 220 to form the upper surface of the pack case 200. The pack lid 230 may protect the components accommodated in the pack case 200, such as the battery cells 100, and prevent the venting gas and/or sparks discharged from the battery cells 100 from being discharged to the outside of the pack case 200, in particular, the top of the pack case 200. In particular, the pack lid 230 may guide the venting gas, sparks or the like toward the venting device 310 inside the pack case 200.

Meanwhile, referring to FIGS. 2 and 6, the pack case 200 may further include cross beams 240. The cross beams 240 may be provided to form partitions among the plurality of battery cells 100 or battery modules 10. Further, the cross beams 240 may be provided between the side frames 220 where the plurality of battery cells 100 and the venting devices 310 are provided. For example, each cross beam 240 may be formed in the shape of a partition wall elongated in the left-right direction, and interposed between the battery modules 10 adjacent to each other in the front-rear direction. Further, the cross beam 240 may be formed in the shape of a partition wall elongated in the front-rear direction, and interposed between the battery modules 10 adjacent to each other in the left-right direction.

Further, the cross beams 240 may be provided to be spaced apart from the pack lid 230 by a predetermined distance. That is, the cross beams 240 may be provided such that at least a portion of the upper end of each cross beam 240 is not in contact with the lower surface of the pack lid 230 but is spaced apart therefrom by a predetermined distance.

According to the embodiment described above, heat or flame may be prevented from moving directly among the cell assemblies or the battery modules 10 partitioned by the cross beams 240. Further, according to the embodiment above, the separation space between the cross beams 240 and the pack lid 230 may further improve the effect in guiding the gas, sparks or the like occurring in the battery cells 100 to move upward in the internal space of the pack case. For example, as indicated by the dashed arrow in FIG. 6, the gas, sparks or the like may be guided to the separation space between the cross beams 240 and the pack lid 230, reflected on the pack lid 230 or flow along the lower surface of the pack lid 230 toward the venting device 310, and reach the protection cover 320 covering the upper end portion of the venting device 310. According to the embodiment of the present disclosure described above, the protection cover 320 provided in the venting device 310 may further block the sparks emitted from the battery cells 100.

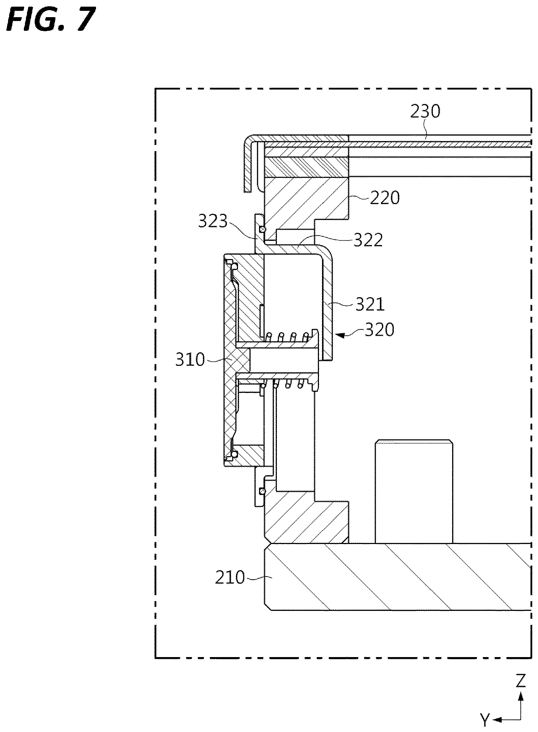

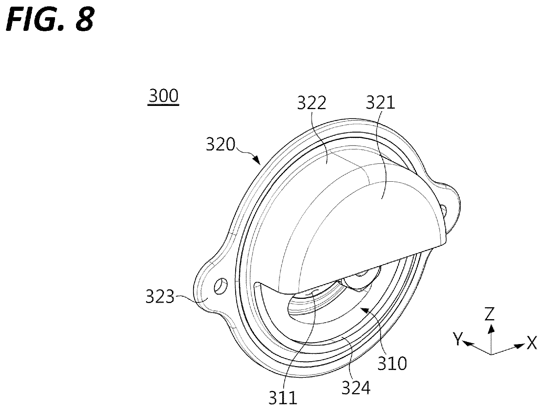

FIG. 7 is an enlarged cross-sectional view of a main portion of the battery pack according to an embodiment of the present disclosure, and FIG. 8 is a view illustrating a venting unit included in the battery pack according to an embodiment of the present disclosure.

The detailed structure of the protection cover 320 is described below with reference to FIGS. 7 and 8. The protection cover 320 may include a main cover 321 and a top cover 322.

The main cover 321 may be disposed to face the venting device 310. The main cover 321 may be configured to cover the front inner surface of the venting device 310. The main cover 321 may have a plate shape. Since the main cover 321 is formed in the plate shape, the main cover 321 may face the venting device 310 or the side frame 220 in parallel. According to the embodiment of the present disclosure described above, the main cover 321 may more easily cover a portion of the venting device 310.

The top cover 322 may extend from the upper edge of the main cover 321. For example, the top cover 322 may extend from the main cover 321 toward the venting device 310. The top cover 322 may be configured to cover the top of the venting device 310. Thus, the top cover 322 may block sparks traveling toward the top of the venting device 310.

According to the embodiment of the present disclosure above, the protection cover 320 may block not only the sparks directed toward the front surface of the venting device 310 but also the sparks directed toward the top of the venting device 310, so that the spark may be more effectively blocked from being emitted to the outside of the pack case 200.

Further, according to the embodiment of the present disclosure above, a separation distance is formed by the top cover 322 between the main cover 321 and the venting device 310 at the upper end portion of the venting device 310, so that a space in which the venting gas may flow may be formed. Further, in this case, the venting gas may also be discharged from the portion of the venting device 310 that is covered by the protection cover 320. Thus, even when the venting gas is trapped in the space between the protection cover 320 and the venting device 310, the venting gas may be more smoothly discharged through the space.

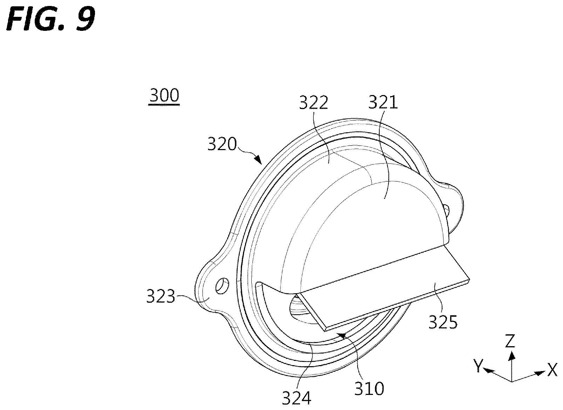

FIG. 9 is a view illustrating a venting unit included in the battery pack according to another embodiment of the present disclosure.

Referring to FIG. 9, the protection cover 320 may further include a lower-end bent portion 325.

The lower-end bent portion 325 may be configured to extend while being bent from the lower end of at least one of the main cover 321 and the top cover 322 in the direction away from the venting device 310 at a predetermined angle. In the embodiment of FIG. 9, the lower-end bent portion 325 is bent only at the lower end of the main cover 321. The lower-end bent portion 325 may be configured in an oblique shape. The lower-end bent portion 325 may be bent to be close to the base frame 210 as extending outward away from the main body of the main cover 321. That is, the lower-end bent portion 325 may be provided to an obtuse angle with respect to the main cover 321.

According to the embodiment of the present disclosure above, sparks reflected downward after hitting the main cover 321 may be guided to the direction toward the inside of the pack case 200 by the lower-end bent portion 325. Thus, the sparks may be more effectively blocked from being directed back toward the venting device 310, so that the emission of the sparks to the outside of the pack case 200 may be more effectively suppressed.

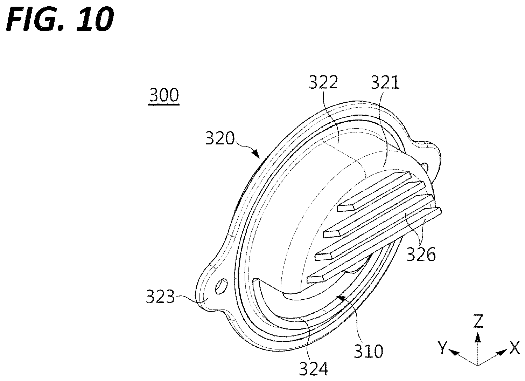

FIG. 10 is a view illustrating a venting unit included in the battery pack according to yet another embodiment of the present disclosure.

Referring to FIG. 10, the protection cover 320 may further include a projection portion 326.

The projection portion 326 may be configured such that at least a portion of the main cover 321 projects. The projection portion 326 may be configured to project outward from the outer surface of the main cover 321, *e.g.,* project in the direction toward the inside of the pack case 200. For example, referring to the embodiment of FIG. 10, the projection portion 326 may have the shape projecting outward from the outer surface of the main cover 321.

Further, the projection portion 326 may be provided to extend obliquely from the outer surface of the main cover 321 toward the pack lid 230. That is, the projection portion 326 may be provided to form an acute angle with respect to the main cover 321. For example, at least a portion of the projection portion 326 may be configured to project outward from the outer surface of the main cover 321, while being directed upward at the outer end thereof. The length of the projection portion 326 that protrudes from the main cover 321 may vary.

According to an embodiment, a plurality of projection portions 326 may be provided. The plurality of projection portions 326 may be arranged to be spaced apart from each other along the vertical direction (Z-axis direction). Further, the plurality of projection portions 326 may be arranged to be spaced apart from each other along the horizontal direction.

According to the embodiment of the present disclosure above, the sparks, flame, or the like emitted from the battery cells 100 are reflected by the projection portions 326, so that the flow of sparks, flame or the like with the strong straightness may be further suppressed. Further, in this case, particles such as sparks may be captured in, for example, furrows formed between the projection portions 326. Therefore, the sparks, flame or the like may be more effectively blocked from being emitted to the outside of the pack case 200.

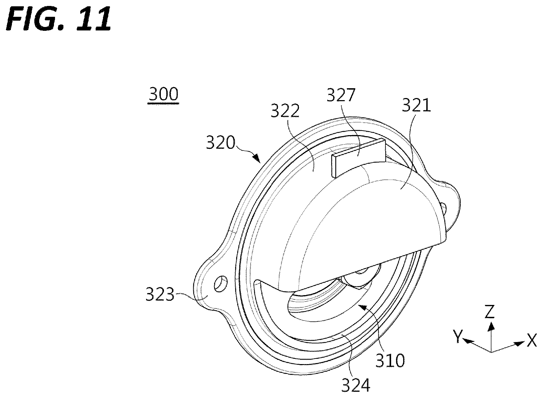

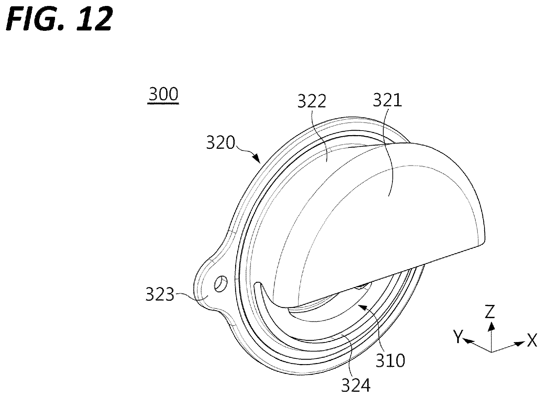

FIG. 11 is a view illustrating a venting unit included in the battery pack according to yet another embodiment of the present disclosure, and FIG. 12 is a view illustrating a venting unit included in the battery pack according to yet another embodiment of the present disclosure.

Referring to FIGS. 8 to 12, the top cover 322 may be provided in a curved shape. For example, when the protection cover 320 is viewed from the front, the upper end of the main cover 321 may be formed in an arc shape, and the top cover 322 may extend from the upper end of the main cover 321. Accordingly, the top cover 322 may also be formed in the arc shape.

According to the embodiment of the present disclosure above, the top cover 322 is formed in the curved shape, which has no corners, so that particles such as sparks may be prevented from being collected on the top cover 322. Further, according to the embodiment of the present disclosure above, the pressure applied to the top cover 322 due to the sparks may be distributed, so that the rigidity of the protection cover 320 may be further enhanced.

Referring to FIG. 11, the protection cover 320 may further include a protrusion portion 327.

The protrusion portion 327 may be provided at one end of the top cover 322 that is connected to the main cover 321. The protrusion portion 327 may be provided to protrude upward from the top cover 322. For example, referring to the embodiment of FIG. 11, the protrusion portion 327 may have a shape protruding upward from the outer surface of the top cover 322.

According to the embodiment of the present disclosure above, sparks collected on the top cover 322 may be prevented from traveling back toward the side of the battery cells 100 or the venting device 310. For example, in the embodiment of FIG. 11, the protrusion portion 327 may block sparks from moving to the battery cells 100 disposed on the inner side from the venting unit 300. Further, the protrusion portion 327 may bend or divert the direction of flow of sparks moving toward the venting device 310, such that the sparks move in the left-right direction, which is the side of the venting device 310 that is not exposed by the protection cover 320.

Referring to FIG. 12, the top cover 322 may be provided to slope upwardly toward the main cover 321. That is, the top cover 322 may be formed in a trumpet shape that slopes upwardly as being close to the main cover 321 from the side of the venting device 310.

According to the embodiment of the present disclosure above, sparks collected on the top cover 322 may be prevented from moving inward, *e.g*., toward the side of the battery cells 100 or the venting device 310. Further, the sparks on the top cover 322 may be guided to move in the left-right direction, which is the side of the venting device 310 that is not exposed by the protection cover 320.

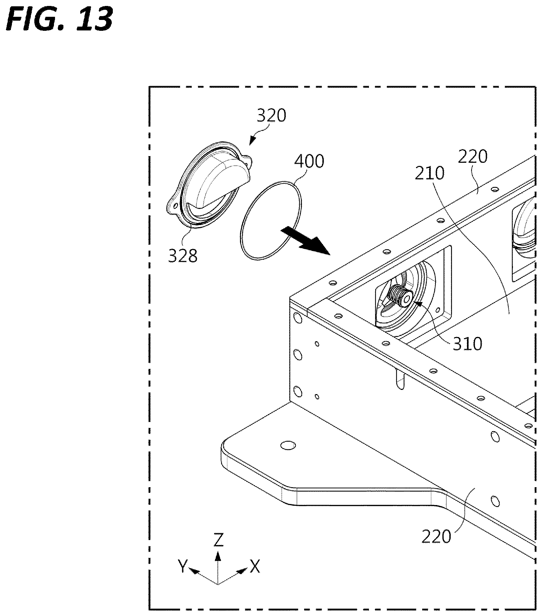

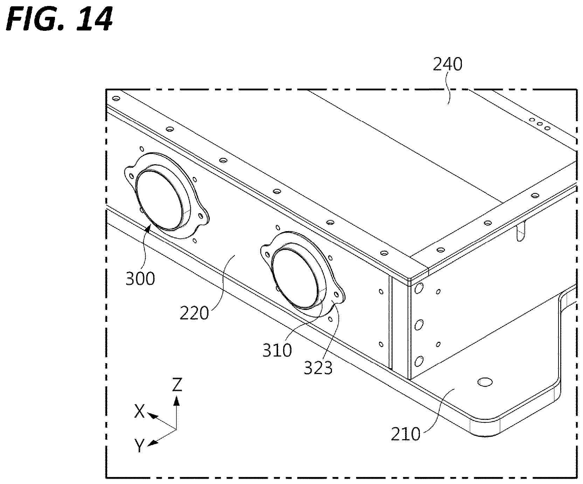

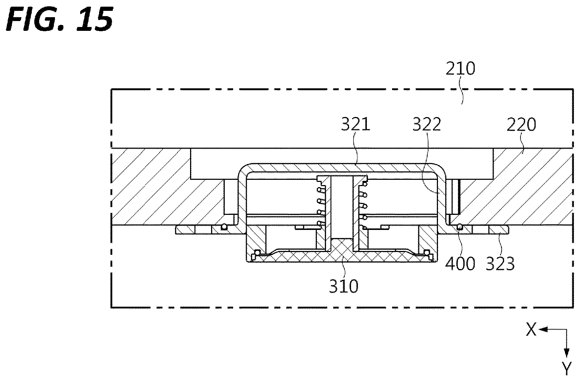

FIG. 13 is a view illustrating a state where the protection cover 320 is removed from the pack case 200 of the battery pack 20 according to an embodiment of the present disclosure, and FIG. 14 is a perspective view of a portion of the battery pack according to an embodiment of the present disclosure, when viewed from outside. FIG. 15 is a cross-sectional view of a corner portion of the pack case 200 of the battery pack 20 according to an embodiment of the present disclosure, when viewed from above.

Referring to FIGS. 8 to 15, the protection cover 320 may include a cover housing 323.

The extended end of the top cover 322 may be connected to the cover housing 323. That is, the top cover 322 may be provided between the cover housing 323 and the main cover 321 to connect the cover housing 323 and the main cover 321 to each other.

The cover housing 323 may be configured such that at least a portion of the venting device 310 is inserted into the cover housing 323. To this end, the cover housing 323 may include an insertion hole 324. At least a portion of the venting device 310 may be inserted into the insertion hole 324.

For example, the cover housing 323 may be mounted in the mounting hole 221 formed in the side frame 220, such that the main cover 321 and the top cover 322 are provided on the inner side of the side frame 220. To this end, at least a portion of the outer circumference of the cover housing 323 may be configured to correspond to the mounting hole 221 of the side frame 220. Further, a portion of the venting device 310 may be inserted into the insertion hole 324 formed in the cover housing 323 of the protection cover 320, and disposed on the further outer side relative to the main cover 321 and the top cover 322. Thus, according to the embodiment of the present disclosure above, sparks or the like occurring in the battery cells 100 may be blocked by the main cover 321 and the top cover 322, and the gas that is not blocked by the main cover 321 and the top cover 322 may be discharged to the outside of the pack case 200 through discharge holes 311 formed in the venting device 310.

Referring to FIGS. 13 and 14, the cover housing 323 may be mounted in the pack case 200. For example, the cover housing 323 may be coupled and fixed to the side frame 220 by bolts. According to the embodiment of the present disclosure above, the configuration of coupling and fixing the protection cover 323 and the side frame 220 to each other may be achieved by the simple structure. In this case, the battery pack 20 may easily be assembled, which may reduce time and costs.

The cover housing 323 may be coupled to the pack case 200 on one side surface of the pack case 200. For example, as illustrated in FIGS. 13 and 14, the cover housing 323 may have an outer diameter that is wider than the mounting hole 221 formed in the side frame 220, such that the rim portion of the cover housing 323 may be attached and coupled to the outer surface of the side frame 220. That is, in the embodiment above, the protection cover 320 may be coupled from the outer side of the pack case 200. In particular, according to an embodiment of the present disclosure, the venting unit 300 may be configured in the integrated form of the venting device 310 and the protection cover 320. In this case, the venting unit 300 is assembled outside the pack case 200 in the state where the battery cells 100, etc., are accommodated in the pack case 200, instead of being assembled in the complicated inside of the pack case 200, so that the productivity and the assembly performance may be improved.

Referring to FIGS. 13 and 15, the battery pack 20 according to an aspect of the present disclosure may further include a sealing member 400. When the cover housing 323 is coupled to one side surface of the pack case 200, a separation space may be formed between the cover housing 323 and the one side surface of the pack case 200. The sealing member 400 may be configured to seal the separation space.

In this case, a portion of the cover housing 323 may be dented to form a mounting groove 328 into which the sealing member 400 is inserted. As illustrated in FIG. 13, when the cover housing 323 is coupled to the outer surface of the pack case 200, the mounting groove 328 may be formed in the inner surface of the cover housing 323.

Unlike the embodiment above, the cover housing 323 may be coupled to the inner surface of the side frame 220. In this case, the mounting groove 328 may be formed in the outer surface of the cover housing 323, and the sealing member 400 may be provided between the outer surface of the cover housing 323 and the inner surface of the side frame 220.

The top cover 322 may be provided to extend inward from the cover housing 323. Thus, the top cover 322 and the main cover 321 may be provided inside the pack case 200. Further, at least a portion of the top cover 322 and the main cover 321 may be inserted into the mounting hole 221 of the side frame 220.

In this case, it is possible to minimize the formation of the prominent part of the venting unit 300 on the outer side of the pack case 200. Thus, the mounting performance of the battery pack 10 may be improved. In particular, according to the embodiment above, the space where the battery pack 10 is mounted is not unnecessarily increased, and it is possible to prevent the prominent part from interfering with other devices provided in the vicinity of the battery pack 10.

Further, as illustrated in FIG. 15, at least a portion of the venting device 310, the top cover 322, and the main cover 321 may be provided in the inwardly recessed portion of the side frame 220. That is, the main cover 321 and the top cover 322 may be provided to not protrude inward relative to the venting device 310 and the inner surface of the side frame 220.

According to the embodiment of the present disclosure above, the main cover 321 and the top cover 322 may be suppressed from protruding into the internal space of the pack case 200. Accordingly, it is possible to minimize the occupation of the internal space of the pack case 200 by the protection cover 320, which may improve the efficiency of the battery pack 20.

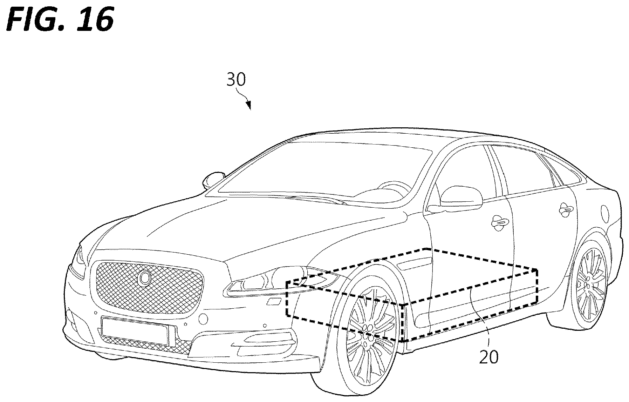

FIG. 16 is a schematic perspective view of an automobile including a battery pack according to an embodiment of the present disclosure.

Referring to FIG. 16, an automobile 30 according to an embodiment of the present disclosure may include at least one battery pack 20 including the pack case 200 according to the embodiments described above. The automobile 30 according to the present disclosure may be, for example, an electric automobile, a hybrid automobile, or a plug-in hybrid automobile. The automobile 30 may be any of various types of automobiles including not only four-wheeled automobiles but also two-wheeled or three-wheeled automobiles. According to an embodiment, the automobile 30 may be powered by the battery pack 20 according to an embodiment of the present disclosure.

While embodiments of the present disclosure have been described with reference to the drawings, the present disclosure is not limited to the embodiments. Various modifications may be made to the present disclosure by those with ordinary skill in the art of the present disclosure without departing from the gist of the present disclosure defined in the claims, and should not be construed as being independently from the technical idea or view of the present disclosure.

## Claims

1. A battery pack comprising:
a plurality of battery cells;
a pack case configured to accommodate the plurality of battery cells; and
a venting unit configured to be mounted in the pack case, and provided with a venting device configured to discharge a gas generated in the plurality of battery cells to an outside of the pack case, and a protection cover configured to cover at least a portion of the venting device.

2. The battery pack according to claim 1, wherein the protection cover is configured to cover an upper end portion of the venting device in order to block sparks emitted from the plurality of battery cells.

3. The battery pack according to claim 2, further comprising:
a module case configured to accommodate the plurality of battery cells in an internal space thereof, and provided with a venting hole formed in a top thereof to communicate with the internal space.

4. The battery pack according to claim 1, wherein the pack case includes
a base frame on which the plurality of battery cells are placed, and
a side frame extending upward from the base frame, and allowing the venting device to be mounted therein, and
the side frame includes a mounting hole into which at least a portion of the venting device is inserted.

5. The battery pack according to claim 1, wherein the protection cover includes:
a main cover disposed to face the venting device, and configured to cover a front of the venting device, and
a top cover extending from the main cover toward the venting device, and configured to cover a top of the venting device.

6. The battery pack according to claim 5, wherein the protection cover further includes:
a lower end bend formed to be bent from a lower end of at least one of the main cover and the top cover in a direction away from the venting device.

7. The battery pack according to claim 5, wherein the protection cover further includes:
a projection portion provided to project outward from an outer surface of the main cover.

8. The battery pack according to claim 5, wherein the top cover is formed in a curved shape.

9. The battery pack according to claim 8, wherein the protection cover further includes:
a protrusion portion provided to protrude upward from one end of the top cover that is connected to the main cover.

10. The battery pack according to claim 9, wherein the top cover is formed to slope upwardly toward the main cover.

11. The battery pack according to claim 5, wherein the protection cover includes:
a cover housing mounted in the pack case, connected to an extended end of the top cover, and configured to allow at least a portion of the venting device to be inserted thereinto.

12. The battery pack according to claim 11, wherein the cover housing is coupled to one side surface of the pack case, and further includes a sealing member configured to seal a separation space between the cover housing and the one side surface of the pack case.

13. The battery pack according to claim 11, wherein the top cover extends inward from the cover housing so that the top cover and the main cover are provided inside the pack case.

14. An automobile comprising the battery pack according to claim 1.

15. A battery pack case configured to accommodate a plurality of battery cells and equipped with a venting unit,
wherein the venting unit includes:
a venting device configured to be mounted in the battery pack case, and to discharge a gas generated in the plurality of battery cells to an outside of the battery pack case; and
a protection cover configured to cover at least a portion of the venting device.

16. The battery pack case according to claim 15, wherein the protection cover is configured to cover an upper end portion of the venting device to block sparks emitted from the plurality of battery cells.

17. The battery pack case of claim 15, further comprising:
a base frame on which the plurality of battery cells are placed; and
a side frame extending upward from the base frame, and allowing the venting device to be mounted therein,
wherein the side frame includes a mounting hole into which at least a portion of the venting device is inserted.

18. The battery pack case according to claim 16, wherein the protection cover includes:
a guiding channel capable of blocking sparks emitted from the plurality of battery cells, and simultaneously, guiding a direction of the sparks to an inside of the battery pack.
